(19) Europäisches Patentamt
European Patent Office
Office européen des brevets

(11) EP 1 228 126 B1

(12) **EUROPÄISCHE PATENTSCHRIFT**

(45) Veröffentlichungstag und Bekanntmachung des Hinweises auf die Patenterteilung:
**15.10.2003 Patentblatt 2003/42**

(21) Anmeldenummer: **00953178.1**

(22) Anmeldetag: **18.08.2000**

(51) Int Cl.[7]: **C08J 9/00**, C08J 9/04

(86) Internationale Anmeldenummer:
**PCT/EP00/08068**

(87) Internationale Veröffentlichungsnummer:
**WO 01/016216 (08.03.2001 Gazette 2001/10)**

# (54) VERWENDUNG VON ADDITIV-MASTERBATCHES BEI DER HERSTELLUNG VON MASSENKUNSTSTOFFEN

USE OF ADDITIVE MASTER BATCHES FOR PRODUCING BULK PLASTICS

UTILISATION DE MELANGES MAITRES D'ADDITIFS LORS DE LA PRODUCTION DE MATIERES PLASTIQUES DE GRANDE DIFFUSION

(84) Benannte Vertragsstaaten:
**DE**

(30) Priorität: **27.08.1999 DE 19940692**

(43) Veröffentlichungstag der Anmeldung:
**07.08.2002 Patentblatt 2002/32**

(73) Patentinhaber: **Cognis Deutschland GmbH & Co. KG**
**40598 Düsseldorf (DE)**

(72) Erfinder:
- **BIRNBRICH, Paul**
  **D-42719 Solingen (DE)**
- **PADURSCHEL, Petra**
  **D-40822 Mettmann (DE)**
- **KLAMANN, Jörg-Dieter**
  **D-27574 Bremerhaven (DE)**
- **MATHIS, Raymond**
  **D-40627 Düsseldorf (DE)**

(56) Entgegenhaltungen:
**WO-A-98/16579**
**DE-A- 19 851 689**
**GB-A- 1 496 960**
**US-A- 5 643 969**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

### Gebiet der Erfindung

Die Erfindung betrifft die Verwendung von Additiv-Masterbatches bei der Herstellung von Massenkunststoffen.

### Stand der Technik

Polymere bestehen aus Molekülketten mit zahlreichen, sich praktisch endlos wiederholenden Bausteinen, welche sich in bezug auf die physikalischen Eigenschaften von niedermolekularen Verbindungen unterscheiden. So weisen Polymere im Vergleich zu niedermolekularen Verbindungen beispielsweise hohe Zugfestigkeiten und Elastizität auf.

In polymerisierte Kunststoffmassen werden im Zuge der industriellen Verarbeitung — je nach Weiterverarbeitung und Zweckbestimmung — geeignete Zusatzstoffe, sogenannte Additive, eingemischt. Auf diese Weise können Basispolymere an individuelle Bedürfnisse hinsichtlich der gewünschten Eigenschaften angepaßt werden.

In der Regel bestehen zwischen Basispolymeren einerseits und flüssigen oder leicht schmelzbaren Additiven andererseits relativ große Viskositätsunterschiede, die zu Unverträglichkeiten führen können. Aufgrund dieser Tatsache lassen sich meist nur geringe Anteile von Additiven in Basispolymere einmischen, sofern nicht spezielle Maßnahmen getroffen werden.

Zur Vermeidung von Dosierproblemen und zum Erreichen einer homogeneren Verteilung bevorzugen viele Kunststoffverarbeiter ein Konzentrat des jeweiligen Additivs in den Basispolymeren. Dabei wird jeweils ein Basispolymer bzw. eine Mischung mehrerer Basispolymere mit einem oder mehreren Additiven erwärmt, aufgeschmolzen, gemischt und in eine schüttfähige Form überführt, beispielsweise in mit Additiven beladene Trägermaterialien in Granulatform. Diese werden auch Additivmasterbatches genannt.

Zur Erzielung poröser oder mikroporöser Polymerstrukturen sind dem Fachmann zahlreiche Herstellverfahren bekannt, beispielsweise die Phaseninversion, ein Nuklearbeschuß zur Einlagerung mikroporöser Festteilchen und die Zusammensinterung von kleinen mikroporösen Partikeln.

Ein besonders attraktives Verfahren zur Herstellung additiv beladener, poröser Trägermaterialien ist aus **EP-A-657 489** bekannt. Bei diesem Verfahren geht man von thermoplastischen Basispolymeren aus, versetzt sie mit Aufschäumhilfen, schmilzt und mischt die Masse und erhält nach dem Abkühlen ein schüttfähiges poröses Trägermaterial, das anschließend mit einem gewünschten Additiv beladen wird. Als geeignete Aufschäumhilfen sind dazu Azodicarbonamide und Zitronensäurederivate offenbart. In einer bevorzugten Ausführungsform wird in die Schmelze von Basispolymeren und Aufschäumhilfen wenigstens zeitweise zusätzlich ein inertes Gas, beispielsweise Stickstoff, eingeleitet, um besonders hohe Porositäten zu erzielen.

Formgestaltete Werkstücke beliebiger Raumform, einschließlich Formkörpern, Fasern und Folien auf Polyolefinbasis finden heute in breitestem Umfange praktische Verwendung. Ein wichtiger Problembereich liegt hier in der Verbesserung der Oberflächeneigenschaften dieser aufgrund ihrer Struktur unpolaren Kohlenwasserstoffverbindungen. So ist die mangelnde Haftfestigkeit gegenüber Beschichtungen und Verklebungen ein zentrales Problem, zu dessen Lösung seit Jahrzehnten zahlreiche Vorschläge gemacht worden sind.

Es ist bekannt, daß die Kompatibilität der Kunststoff-Oberfläche gegenüber Beschichtungen und Verklebungen durch beispielsweise oxidative Nachbehandlungsverfahren wie Corona- oder Plasmabehandlung verbessert werden kann.

Hierbei wird der Kunststoff in Gegenwart von Gasen und Entladungen an der Oberfläche oxidiert oder chemisch modifiziert, wodurch sich gewisse Oberflächen-Eigenschaften des Kunststoffs modifizieren lassen. Diese Methoden erfordern jedoch neben einem hohen Energieeinsatz stets einen zusätzlichen Arbeitsgang und führen zu Ozonemissionen bei der Fertigung von Kunststoffteilen. Daneben sind chemische Vorbehandlungsverfahren wie z.B. das Behandeln mit Fluor- oder Chlorgas, mit Chromschwefelsäure oder Fluorsulfonsäure, usw. seit längerem bekannt.

**EP-B-372 890** beschreibt Fasern auf Polyolefin- oder Polyester-Basis mit einem mit der Oberfläche verhafteten Schmiermittel. Dieses Schmiermittel umfaßt eine Mischung aus (1) Fettsäurediethanolamid, (2) einem Polyether-modifizierten Silikon, (3) einem Sorbitan-Fettsäureester und (4) einem Metallsalz eines Alkylsulfonats; dabei liegen die Komponenten (1) bis (4) in speziellen Mengenverhältnissen vor. Gemäß Seite 3, Zeilen 20-26 wird die Mischung der Komponenten (1) bis (4) auf die Oberfläche aufgebracht. Diese Technik des Aufbringens der die vier Komponenten enthaltenden Mischung auf die Oberfläche bereits fertiger Fasern wird auch auf Seite 4, Zeilen 6-9 nochmals näher erläutert. Dort sind als Aufbring-Techniken genannt: a) der Einsatz von Rollen, b) ein Aufsprühen und c) das Eintauchen. Es handelt sich demnach um ein Verfahren, bei dem eine Mischung der Komponenten (1) bis (4) in einem zusätzlichen Verarbeitungsschritt auf die Oberfläche von Polyolefin-Formteilen aufgebracht wird. Der in Anspruch 1 der EP-B-372 890 verwendete Ausdruck "mit der Faseroberfläche verhaftet" ist demnach vom Fachmann klar in der Weise zu verstehen, daß es sich dabei lediglich um eine lockere und temporäre Haftung - etwa durch relativ schwache Adhäsionskräfte - handelt, keinesfalls aber um eine dauerhafte Verankerung.

Im Hinblick auf die sehr verbreiteten klassischen chemischen Nachbehandlungsverfahren wie Corona- und Plasmabehandlung ist dem Fachmann bekannt, daß sich keine genauen Aussagen über die ablaufenden Prozeßvorgänge machen lassen. Es gilt jedoch als erwiesen, daß sich oxidative Veränderungen der Oberfläche ergeben und dadurch gewisse "aktive Zentren" entstehen. Deren Konzentration geht jedoch in der Regel mit der Zeit zurück, so daß auch der Vorbehandlungseffekt nur über einen bestimmten Zeitraum, meist nicht über 72 Stunden hinaus, erhalten bleibt. Den bisher referierten Methoden des Standes der Technik ist insgesamt gemeinsam, daß die angestrebten Oberflächen-Wirkungen in der Regel nur temporär vorhanden sind.

**EP-B-616 622** betrifft extrudierbare, kompostierbare Polymerzusammensetzungen, umfassend ein extrudierbares, thermoplastisches Polymer, Copolymer oder Mischungen davon, die ein abbauförderndes System aus einem autooxidativen Bestandteil und einem Übergangsmetall enthält. Das autooxidative System umfaßt dabei eine Fettsäure, eine substituierte Fettsäure oder Derivate oder Mischungen davon, wobei die Fettsäure 10 bis 22 C-Atome aufweist und mindestens 0,1 Gew.-% ungesättigter Verbindungen und mindestens 0,1 Gew.-% freie Säure enthält. Das Übergangsmetall ist in der Zusammensetzung in einer Menge von 5-500 ppm in Form eines Salzes enthalten und ausgewählt aus der Gruppe Kobalt, Mangan, Kupfer, Cer, Vanadium und Eisen. Die Zusammensetzung soll in Form einer Folie einer Dicke von etwa 100 Mikron bei 60 °C und einer relativen Feuchtigkeit von mindestens 80% innerhalb von 14 Tagen oxidativ zur Versprödung abbaubar sein.

**WO 97/12694** und **WO 98/42776** beschreiben die Verwendung von Amphiphilen zur dauerhaften Verbesserung der Klebstoff- und/oder Beschichtungs-Kompatibilität von Polyolefin-basierten Formkörpern, Fasern und Folien. Dabei unterwirft man eine Mischung enthaltend (a) überwiegend ein oder mehrere Polyolefine, (b) ein oder mehrere migrationsfähiger Amphiphile und (c) ein oder mehrere Übergangsmetall-Verbindungen, bei Temperaturen im Bereich von 180 bis 320 °C auf übliche Weise einer formgebenden Verarbeitung, beispielsweise der Extrusion. Es ist offenbart, daß als Komponente b) insbesondere Dialkanolamide ungesättigter Fettsäuren, etwa Ölsäurediethanolamid oder Linolsäurediethanolamid, eingesetzt werden können. Im Hinblick auf die Natur der Komponente (c) offenbart WO 97/12694 hinsichtlich des darin enthaltenen Übergangsmetalls insbesondere Co, Zr, Fe, Pb, Mn, Ni, Cr, V und Ce, WO 98/42776 insbesondere Ti und Sn.

**Beschreibung der Erfindung**

Gegenstand der vorliegenden Erfindung ist die Verwendung von Additiv-Masterbatches bei der Herstellung von Massenkunststoffen, dadurch gekennzeichnet, daß man Additiv-Masterbatches einsetzt, die dadurch erhältlich sind, daß man zunächst zu wenigstens einem Basispolymeren (a) ein chemisches Treibmittel gibt, die Masse schmilzt, vor und/oder nach dem Schmelzen mischt, und die Mischung unter Bildung eines schüttfähigen, porösen Trägermaterials abkühlt, mit der Maßgabe, daß man in einem Extruder oder mehrwelligen Kneter-Extruder arbeitet und wenigstens zeitweise ein inertes Gas in die Schmelze von Basispolymer und chemischem Treibmittel einleitet und den derart hergestellten Kunststoffschaum anschließend mit einer flüssigen und/oder aufgeschmolzenen Mischung belädt, wobei diese Mischung 0,01 bis 50 Gew.-% - bezogen auf die Basispolymeren - ein oder mehrerer Fettsäureamide (b) und 0,01 bis 1000 ppm ein oder mehrerer Übergangsmetall-Verbindungen (c) - Metallgehalt der Übergangsmetall-Verbindungen bezogen auf die Basispolymeren - enthält, mit der Maßgabe, daß man die Fettsäureamide (b) auswählt aus der Klasse der Verbindungen der allgemeinen Struktur (I),

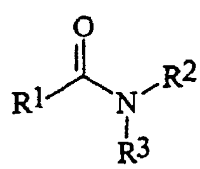

(I)

worin der Rest $R^1$ einen gesättigten Alkylrest mit 5 bis 21 C-Atomen, die Reste $R^2$ und $R^3$ - unabhängig voneinander - Wasserstoff oder Alkylreste mit 1 bis 18 C-Atomen, die mit jeweils bis zu 6 OH-Gruppen, $NH_2$-Gruppen oder $C_{1-10}$-Alkylgruppen substituiert sein können und bei denen bis zu drei Methylengruppen, die einander nicht unmittelbar benachbart sind, durch Sauerstoff ersetzt sein können, bedeuten, mit der Maßgabe, daß nicht beide Reste $R^1$ und $R^2$ gleichzeitig Wasserstoff bedeuten und der zusätzlichen Maßgabe, daß die Gesamtmenge der Komponenten (a), (b) und (c) Fettsäureamide auf Basis ungesättigter Fettsäuren höchstens in einer Menge enthält, die 40 Gew.-% - bezogen auf die Menge der Fettsäureamide (b) auf Basis gesättigter Fettsäuren - entspricht.

Herstellung der (beladbaren) Kunststoffschäume

Das chemische Treibmittel wird in einer Menge von 0,01 bis 5 Gew.% und insbesondere in einer Menge von 0,1 bis 2 Gew.% - bezogen auf die Basispolymeren - eingesetzt. Dabei kann man entweder ein oder mehrere Substanzen als chemisches Treibmittel einsetzen. Vorzugsweise wählt man das chemische Treibmittel aus der Gruppe der Diazoverbindungen, N-Nitrosoverbindungen, Sulfohydrazide, Harnstoffderivate, Guanidinderivate, Borhydrid/Wasser-Systeme, Zitronensäure und deren Ester, Carbonate und Hydrogencarbonate aus. In einer bevorzugten Ausführungsform der vorliegenden Erfindung setzt man als chemisches Treibmittel Carbonate, Hydrogencarbonate, Zitronensäure und deren Ester oder Gemische dieser Verbindungen ein.

Bei den genannten chemischen Treibmitteln handelt es sich um Verbindungen, die durch chemische Reaktionen Gase abspalten und in der polymeren Matrix des oder der Basispolymeren innere Hohlräume erzeugen können. Die freiwerdenden Gase sind beispielsweise Kohlendioxid oder Stickstoff und enthalten keine explosiven Bestandteile. Die Abspaltung wird vorzugsweise in einem relativ kleinen Temperaturintervall, nämlich dem Zersetzungstemperaturbereich des/der jeweils eingesetzten chemischen Treibmittel, durchgeführt und der Verarbeitungstemperatur des/der eingesetzten Basispolymeren angepaßt.

Die chemischen Treibmittel lassen sich prinzipiell in zwei Gruppen einteilen. Treibmittel mit endothermer Zersetzungsreaktion benötigen eine ständige Wärmezufuhr zur Zersetzung und Gasabspaltung. Die Zersetzung beginnt je nach Art des Treibmittels relativ früh schon bei 85 °C und verläuft langsam und gleichmäßig. Sie wird beendet, sobald keine Wärmezufuhr mehr erfolgt und das geschäumte Formteil unterhalb der Zersetzungstemperatur des Treibmittels abgekühlt ist. Der Gasdruck endothermer Treibmittel liegt üblicherweise im Bereich von etwa 8 bis 10 bar. Beispiele für endotherme Treibmittel sind etwa Mischungen aus Carbonaten und Hydrogencarbonaten.

Ein besonders attraktiver Vertreter dieser Art von Treibmitteln ist Natriumhydrogencarbonat.

Treibmittel mit exothermer Zersetzungsreaktion benötigen eine Startenergie, um beim Erreichen der Zersetzungstemperatur quasi explosionsartig Gas freizusetzen. Der Gasdruck exothermer Treibmittel beträgt in der Regel etwa 12 bis 15 bar. Beispiele exothermer Treibmittel sind Sulfohydrazide und Semicarbazide. Exemplarisch sei in diesem Zusammenhang 4,4'—Oxybisbenzolsulfohydrazid und Toluol-4-Sulfonohydrazid genannt.

In einer Ausführungsform wird der Extruder in einem Temperaturbereich von 100 bis 265°C, einem Druckbereich von 50 bis 100 bar und einer Schneckendrehzahl von 50 bis 100 U/min betrieben. Dabei richten sich die optimalen Extrusionstemperaturen im wesentlichen nach der Art der eingesetzten Basispolymeren, insbesondere deren Melt Flow Indices (MFI). Sofern als Basispolymer ein Ethylen-Vinylacetat-Copolymer eingesetzt wird, stellt man in der Einzugszone des Extruders vorzugsweise eine Temperatur im Bereich von 100 bis 120°C und im Düsenbereich eine Temperatur im Bereich von 160 bis 180°C ein. Sofern als Basispolymer Polypropylen eingesetzt wird, stellt man in der Einzugszone des Extruders vorzugsweise eine Temperatur im Bereich von 130 bis 150°C und im Düsenbereich eine Temperatur im Bereich von 235 bis 265°C ein. Sofern man als Basispolymer LDPE (low density polyethylene) einsetzt, stellt man in der Einzugszone des Extruders vorzugsweise eine Temperatur im Bereich von 120 bis 140°C und im Düsenbereich eine Temperatur im Bereich von 180 bis 210°C ein.

Wie bereits gesagt leitet man im Zuge des erfindungsgemäßen Verfahrens wenigstens zeitweise ein inertes Gas in die Schmelze von Basispolymer und chemischem Treibmittel ein. Dabei wird das inerte Gas in den Extruder, in dem sich die Schmelze von Basispolymer und chemischem Treibmittel befindet, eingeleitet. Vorzugsweise geschieht das Einleiten des inerten Gases während des gesamten Extrusionsvorganges. Das Gas wird insbesondere fein versprüht eingeleitet, wobei sich die Menge des Gases insbesondere nach der Art der Basispolymeren, dem Anteil an chemischem Treibmittel sowie der Temperatur und der Gesamtmenge der Schmelze richtet. Vorzugsweise stellt man Gasdrucke auf Werte ein, die 5 bis 30 bar oberhalb des Extrusionsdruckes liegen. Die Menge des Gases wird vorzugsweise auf einen Wert im Bereich von 50 bis 100 Volumen-% - bezogen auf das Volumen der extrudierten Polymere — eingestellt; unter "Volumen" ist dabei der Durchsatz des Polymeren pro Zeit (Volumenausstoß in Litern pro Stunde) zu verstehen.

Der nach dem erfindungsgemäßen Verfahren hergestellte (beladbare) Kunststoffschaum, d.h. das poröse Extrudat, wird mit an sich bekannten geeigneten Einrichtungen in granulat- oder pelletförmiges Trägermaterial überführt, beispielsweise durch Stranggranulation.

Die im Zuge des erfindungsgemäßen Verfahrens einzusetzenden Basispolymere, bei denen es sich um thermoplastische Kunststoffe handelt, können an sich beliebig gewählt werden. Beispiele für geeignete Basispolymere sind:

1) Homopolymere aus einem α-Olefin mit zwei bis acht Kohlenstoffatomen, Copolymerisate von zwei entsprechenden α-Olefinen, vorzugsweise Copolymerisate aus Ethylen, Ethylen-Homopolymerisate wie HDPE (high density polyethylene), LDPE (low density polyethylene), VLDPE (very low density polyethylene), LLDPE (linear low density polyethylene), MDPE (medium density polyethylene), UHMPE (ultra high molecular polyethylene), VPE (vemetztes Polyethylen), HPPE (high pressure polyethylene), isotaktisches Polypropylen, syndiotaktisches Polypropylen, Metallocen-katalysiert hergestelltes Polypropylen, schlagzäh-modifiziertes Polypropylen, Random-Copolymere auf Basis Ethylen und Propylen, Blockcopolymere auf Basis Ethylen und Propylen, Homopolymere auf Basis 1-Butylen, 1-Pentylen, 1-Hexylen, 1-Octylen, Isobutylen, 2-Methyl-1-Butylen, 3-Methyl-1-Pentylen, 4-Methyl-1-Pentylen, 2, 3-Dimethyl-1-Butylen, 2-Ethyl-1-Butylen sowie Mischungen davon.
2) Copolymerisate von Ethylen mit 1-Butylen, 1-Hexylen, 1-Octylen und 4-Methyl-1-Pentylen.
3) Ethylen-Vinylacetat-Copolymerisate, Ethylenacrylsäure-Copolymerisate und Mischungen davon.
4) Ethylenpropylengummi (EPDM), auch Dien-modifiziert (EPR), Styrol-Butadien-Styrol-Copolymerisate (SBS), Styrol-Ethylen-Butylen-Styrol-Copolymerisate (SEBS) und Mischungen davon.

Die Basispolymere, die im Zuge des erfindungsgemäßen Verfahrens eingesetzt werden, liegen in der Praxis granalien- oder pelletförmig vor. Sie sind gut schütt- und rieselfähig und daher zum Mischen mit chemischen Treibmitteln gut geeignet.

Gewünschtenfalls unterwirft man den extrudierten Strang einer Verpressung und/oder Überstreckung. Unter Verpressung und/oder Überstreckung des extrudierten Stranges ist folgendes zu verstehen: Sobald der Strang die Austrittsdüse des Extruders verlassen hat, wird er einem mechanischen Prozeß unterworfen, bei dem er Druck- und/ oder Zugkräfte erfährt. Druckkräfte können auf den extrudierten Strang beispielsweise dadurch ausgeübt werden, daß man den Strang zwischen zwei Walzen hindurchführt, wobei man den Abstand der Walzenoberflächen so einstellt, daß er kleiner ist als der Durchmesser des Stranges. In einer bevorzugten Ausführungsform stellt man diesen sogenannten Walzenspalt derart ein, daß er 50 bis 95 % des Durchmessers des Stranges beträgt. Dies bedeutet mit anderen Worten, daß der Strang eine Verpressung derart erfährt, daß sein Durchmesser auf einen Wert im Bereich von 50 bis 95 % seines ursprünglichen Wertes (nämlich des Wertes nach dem Verlassen der Austrittsdüse des Extruders) reduziert wird. Die Anwendung von Zugkräften auf den Strang führt dazu, daß der Strang in Längsrichtung gedehnt bzw. überstreckt wird. In einer bevorzugten Ausführungsform stellt man die Überstreckung auf einen Wert von 10 bis 50 % ein. Eine Überstreckung auf einen gewünschten Wert läßt sich beispielsweise dadurch realisieren, daß man die Abzugsgeschwindigkeit des Stranges entsprechend einstellt. Sofern man sowohl ein Verpressen als auch eine Überstreckung des extrudierten Stranges durchführt, sind beide denkbaren Ausführungsformen möglich, d. h. man kann entweder zunächst eine Verpressung und anschließend eine Überstreckung oder zunächst eine Überstreckung und anschließend eine Verpressung durchführen.

Gewünschtenfalls führt man die Extrusion in Gegenwart eines Nukleierungsmittels durch. Unter einem Nukleierungsmittel wird ein Kristallisationsbeschleuniger verstanden. Synonym für den Begriff des Nukleierungsmittels wird in der Fachliteratur auch der Begriff des Keimbildners verwendet. Nukleierungsmittel sind bei der Verarbeitung von Kunststoffen insbesondere deshalb von Bedeutung, weil sie die Kristallwachstumsgeschwindigkeit von Polymeren beeinflussen. Durch den Zusatz von Nukleierungsmitteln zum Basispolymer werden Zahl und Größe der entstehenden Sphärolithe bestimmt. Dies hat zur Folge, daß nukleierte Polymere ein feinkörnigeres Gefüge aufweisen als nicht nukleierte, was sich in ihren physikalisch-chemischen Eigenschaften bemerkbar macht; so sind beispielsweise grob sphärolithische Kunststoffe bei gleichem kristallinen Anteil spröder und weniger transparent bzw. transluzent als solche mit fein sphärolitischer Struktur.

Im Rahmen der vorliegenden Erfindung wird durch das Nukleierungsmittel, das aus ein oder mehreren Verbindungen bestehen kann, darüber hinaus bewirkt, daß die Lamellenstruktur des nach dem erfindungsgemäßen Verfahren erhältlichen Kunststoffschaumes besonders fein und gleichmäßig ist. In einer Ausführungsform setzt man das Nukleierungsmittel in einer Menge von 0,001 bis 5,0 Gew.% - bezogen auf die Basispolymeren — ein. Dabei ist der Bereich von 0,1 bis 0,8 Gew.% besonders bevorzugt. Die Einarbeitung des Nukleierungsmittels geschieht vorzugsweise vor der Extrusion, d. h. man suspendiert das Nukleierungsmittel in einer Schmelze aus Basispolymeren und chemischem Treibmittel und unterwirft dieses Gemisch anschließend der Extrusion.

Als Nukleierungsmittel kommen insbesondere solche Stoffe in Betracht, die durch das Basispolymer benetzbar bzw. absorbierbar sind, im Basispolymer unlöslich sind, einen

Schmelzpunkt aufweisen, der oberhalb des Schmelzpunktes des Basispolymeren liegt und die darüber hinaus in möglichst feinteiliger Form — in der Regel mit Teilchengrößen im Bereich von etwa 1 bis 10 µm — in der Polymerschmelze homogen dispergierbar sind. In einer bevorzugten Ausführungsform setzt man als Nukleierungsmittel anorganische Stoffe wie Talkum, Kieselsäure oder Kaolin ein. Beispiele für geeignete organische Verbindungen, die sich als Nukleierungsmittel eignen, sind Salze von Mono- oder Polycarbonsäuren.

Gewünschtenfalls führt man die Extrusion in Gegenwart eines Netzmittels durchführt. Der Begriff des Netzmittels ist dem Fachmann, insbesondere dem Tensidfachmann, einschlägig bekannt. Netzmittel sind natürliche oder synthetische Stoffe, die in Lösung die Oberflächenspannung von Wasser oder anderer Flüssigkeiten herabsetzen. Netzmittel sind mithin grenzflächenaktive Stoffe. Hinsichtlich der Art des Netzmittels bestehen im Rahmen der vorliegenden Erfindung an sich keinerlei Einschränkungen. So können prinzipiell alle dem Tensidfachmann nach dem Stand der Technik bekannten Netzmittel eingesetzt werden. In einer bevorzugten Ausführungsform setzt man als Netzmittel Ester von organischen Carbonsäuren mit 8 bis 22 C-Atomen und Alkoholen mit 1 bis 22 C-Atomen, Sorbitanester,

ethoxylierte Fettsäureester sowie wasserlösliche Salze von Monound/oder Disulfosuccinaten ein. Besonders bevorzugt sind Alkalisalze von Di-Iso-Hexylsulfosuccinat und Di-Iso-Octylsulfosuccinat. Die Netzmittel, die sowohl einzeln als auch im Gemisch untereinander eingesetzt werden können, werden in einer Menge von 0,01 bis 5 Gew.% - bezogen auf die Basispolymeren — eingesetzt. Durch die Integration der Netzmittel in den Kunststoffschaum wird insbesondere bewirkt, daß eine Beladung des Kunststoffschaumes mit Kunststoffadditiven in einfacherer Weise gelingt. Dies bedeutet insbesondere, daß der Beladungsgrad der erfindungsgemäß hergestellten Kunststoffschäume in der Regel um 5 bis 20 % höher liegt als der Beladungsgrad vergleichbarer Schäume, bei denen jedoch die Extrusion in Abwesenheit von Netzmitteln durchgeführt wurde.

Beladen der Kunststoffschäume

Die Struktur der primär entstehenden (beladbaren) Kunststoffschäume ist in hohem Maße durch elliptische untereinander verbundene Makro-Poren charakterisiert. Die Kunstoffschäume werden mit den genannten Fettsäureamiden (b) und den Übergangsmetallvebindungen (c) beladen. Hierzu wird der Kunststoffschaum mit wenigstens einem Fettsäureamid (b) und mindestens einer Übergangsmetallverbindung (c) versetzt und mit diesen bei einer unter dem Schmelzpunkt des bei der Herstellung des Kunststoffschaumes eingesetzten Basispolymeren, jedoch über dem Schmelzpunkt der Additivmischung liegenden Temperatur gemischt.

Die erfindungsgemäß einzusetzenden Fettsäureamide (b) der allgemeinen Struktur (I) leiten sich von gesättigten Fettsäuren mit 6 bis 22 C-Atomen ab. Diese Fettsäuren sind durch die allgemeine Struktur (II) $R^1$-COOH, worin $R^1$ die oben genannte Bedeutung hat, charakterisiert.

In einer Ausführungsform handelt es sich bei den Fettsäureamiden (b) um Fettsäurealkanolamide oder -dialkanolamide, wobei die diesen Verbindungen zu Grunde liegenden Fettsäuren gesättigte Fettsäuren mit 6-22 C-Atomen sind.

Bei den Fettsäurealkanolamiden handelt es sich um Verbindungen der allgemeinen Struktur (Ia),

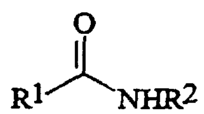

(Ia)

worin $R^1$ die oben genannte Bedeutung hat und $R^2$ einen Alkylrest mit 1 bis 18 C-Atomen bedeutet, der mit jeweils bis zu 6 OH-Gruppen, $NH_2$-Gruppen oder $C_{1-10}$-Alkylgruppen substituiert sein kann. Vorzugsweise bedeutet $R^2$ einen Alkylrest mit 1 bis 6 C-Atomen, der mit einer OH-Gruppe substituiert ist.

Bei den Fettsäuredialkanolamiden handelt es sich um Verbindungen der allgemeinen Struktur (Ib),

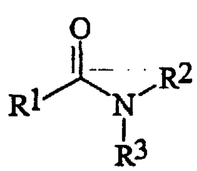

(Ib)

worin $R^1$ die oben genannte Bedeutung hat und die Reste $R^2$ und $R^3$ - unabhängig voneinander - Alkylreste mit 1 bis 18 C-Atomen bedeuten, die mit jeweils bis zu 6 OH-Gruppen, $NH_2$-Gruppen oder $C_{1-10}$-Alkylgruppen substituiert sein können. Vorzugsweise bedeuten die Reste $R^2$ und $R^3$ Alkylreste mit 1 bis 6 C-Atomen, der mit einer OH-Gruppe substituiert sind.

Diese Verbindungen (b) können sowohl einzeln als auch in Kombination miteinander eingesetzt werden.

In einer bevorzugten Ausführungsform setzt man solche Verbindungen (b) ein, deren zu Grunde liegende Fettsäuren gesättigte Fettsäuren mit 12-16 und insbesondere 12-14 C-Atomen sind. Besonders bevorzugte Verbindungen dieser Klasse sind die Mono- und DiEthanolamide von Laurinsäure, Myristinsäure sowie in pflanzlichen Rohstoffen vorkommenden Gemischen dieser Säuren, beispielsweise Kokosfettsäure. Die genannten Verbindungen werden insbesondere in technischer Qualität eingesetzt.

In einer Ausführungsform gilt die zusätzliche Maßgabe, daß die Gesamtmenge der Komponenten (a), (b) und (c) Fettsäureamide auf Basis ungesättigter Fettsäuren höchstens in einer Menge enthält, die 10 Gew.-% - bezogen auf die Menge der Fettsäureamide (b) auf Basis gesättigter Fettsäuren - entspricht.

Wie bereits gesagt werden die Verbindungen (b) bei der Herstellung der Kunststoffschäume auf der Grundlage eines Basispolymeren (a) in Kombination mit Übergangsmetall-Verbindungen (c) eingesetzt. Dabei beträgt die Menge der Übergangsmetall-Verbindung - Metallgehalt der Übergangsmetall-Verbindung bezogen auf die Basispolymeren - 0,01 bis 1000 ppm. Im Hinblick auf die Art der Übergangsmetall-Verbindungen besteht dabei an sich keine besondere Einschränkung. Demnach können im Rahmen der Lehre der vorliegenden Erfindung prinzipiell alle dem Fachmann bekannten Übergangsmetallverbindungen eingesetzt werden. In einer Ausführungsform setzt man als Übergangsmetall-Verbindungen Übergangsmetallsalze ein, vorzugsweise Salze auf Basis von organischen Säuren mit 6 bis 22 C-Atomen. In einer bevorzugten Ausführungsform setzt man die Übergansmetall-Verbindungen in einer - Menge ein, die unterhalb von 5 ppm - Metallgehalt der Übergangsmetall-Verbindung bezogen auf die Polyolefine - liegt. In einer weiteren Ausführungsform setzt man solche Übergangsmetallverbindungen c) ein, deren Metalle aus der Gruppe Co, Zr, Fe, Pb, Mn, Ni, Cr, V, Ce, Ti und Sn gewählt sind.

Gewünschtenfalls setzt man neben den genannten obligatorischen Übergangsmetall-Verbindungen noch weitere Verbindungen ein und zwar solche, die dem Fachmann als Katalysatoren für oxidative Prozesse bekannt sind.

In einer bevorzugten Ausführungsform stellt man das Gewichtsverhältnis der Verbindungen (b) zu dem Metallgehalt der Übergangsmetall-Verbindungen (c) im Bereich von 10 : 0,1 und 10 : $10^{-7}$ ein. Bevorzugt ist ein Bereich von 10 : 0,02 und 10 : $10^{-6}$ und insbesondere 10 : 0,01 und 10 : $10^{-5}$.

Gewünschtenfalls können die Kunststoffschäume neben den Komponenten (b) und (c) mit weiteren dem Fachmann einschlägig bekannten Additiven zur Verarbeitung von thermoplastischen Kunststoffen beladen werden. Beispiele für geeignete Additive sind: Antistatika, Antischleiermittel, Antioxidantien, UV-Stabilisatoren, Haftmittel, Kalandrierhilfen, Formtrennmittel, Gleitmittel, Trennmittel, Schmiermittel, Weichmacher, Duftmittel, Flammschutzmittel, Füllstoffe, Vemetzungsmittel und Mittel zur Erhöhung der Thermostabilität.

Die beladenen Kunststoffschäume werden als Additiv-Masterbatches bezeichnet. Diese Additiv-Masterbatches können bei der Verarbeitung von Massenkunststoffen eingesetzt werden. Dabei kann die Verarbeitung dieser Massenkunststoffe auf an sich beliebige Art erfolgen. Insbesondere seien hier Extrusions-, Kalandrier-, Spritzguß- und Blasformverfahren genannt.

Herstellung von Massenkunststoffen

Die wie beschrieben hergestellten Additiv-Masterbatches lassen sich bei der Herstellung von Massenkunststoffen einsetzen. Von besonderem Vorteil ist dabei der Einsatz bei Massenkunststoffen auf Basis von verklebbaren und oder beschichtbaren Polyolefinen.

Ein weiterer Gegenstand der Erfindung ist ein Verfahren zur Herstellung von verklebten und/oder beschichteten Polyolefin-basierten Formkörpern, Fasern und Folien, wobei man man eine Mischung enthaltend überwiegend ein oder mehrere Polyolefine (A) mit einem Additiv-Masterbatch (B), das dadurch erhältlich ist, daß man zunächst zu wenigstens einem Basispolymeren (a) ein chemisches Treibmittel gibt, die Masse schmilzt, vor und/oder nach dem Schmelzen mischt, und die Mischung unter Bildung eines schüttfähigen, porösen Trägermaterials abkühlt, mit der Maßgabe, daß man in einem Extruder oder mehrwelligen Kneter-Extruder arbeitet und wenigstens zeitweise ein inertes Gas in die Schmelze von Basispolymer und chemischem Treibmittel einleitet und den derart hergestellten Kunststoffschaum anschließend mit einer flüssigen und/oder aufgeschmolzenen Mischung belädt, wobei diese Mischung 0,01 bis 50 Gew.-% - bezogen auf die Basispolymeren - ein oder mehrerer Fettsäureamide (b) und 0,01 bis 1000 ppm ein oder mehrerer Übergangsmetall-Verbindungen (c) - Metallgehalt der Übergangsmetall-Verbindungen bezogen auf die Basispolymeren - enthält, mit der Maßgabe, daß man die Fettsäureamide (b) auswählt aus der Klasse der Verbindungen der allgemeinen Struktur (I),

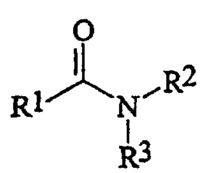

(I)

worin der Rest $R^1$ einen gesättigten Alkylrest mit 5 bis 21 C-Atomen, die Reste $R^2$ und $R^3$ - unabhängig voneinander - Wasserstoff oder Alkylreste mit 1 bis 18 C-Atomen, die mit jeweils bis zu 6 OH-Gruppen, $NH_2$-Gruppen oder $C_{1-10}$-Alkylgruppen substituiert sein können und bei denen bis zu drei Methylengruppen, die einander nicht unmittelbar benachbart sind, durch Sauerstoff ersetzt sein können, bedeuten, mit der Maßgabe, daß nicht beide Reste $R^1$ und $R^2$ gleichzeitig Wasserstoff bedeuten und der zusätzlichen Maßgabe, daß die Gesamtmenge der Komponenten (a), (b) und (c) Fettsäureamide auf Basis ungesättigter Fettsäuren höchstens in einer Menge enthält, die 40 Gew.-% - bezogen

auf die Menge der Fettsäureamide (b) auf Basis gesättigter Fettsäuren - entspricht, bei Temperaturen im Bereich von 180 bis 330 °C auf übliche Weise einer formgebenden Verarbeitung wie Extrusions-, Kalandrier-, Spritzguß-, Blasformverfahren und dergleichen unterwirft und die dabei erhaltenen Polyolefin-basierten Formkörper, Fasern und Folien mit verbesserter Klebstoff- und/oder Beschichtungs-Kompatibilität anschließend auf übliche Weise mit einem Klebstoff und/oder einer Beschichtungsmasse in Kontakt bringt

Die in den Additiv-Masterbatches enthaltenen Verbindungen (b) sind zur Migration befähigt. Darunter ist zu verstehen, daß diese Verbindungen in der Lage sind, im Zuge der Herstellung durch beispielsweise Extrusionsverfahren an die Oberfläche des resultierenden Polyolefin-Formkörpers zu gelangen. Sie reichem sich dadurch an der Oberfläche bzw. den Oberflächen-nahen Bereichen der Kunststoff-Matrix an, was durch sukzessives Abtragen von Oberflächenschichten in der Größenordnung von jeweils wenigen Nanometern und anschließende Abscan-Techniken (z. B. ESCA) von der Anmelderin verifiziert wurde.

Durch den erfindungsgemäßen Einsatz der genannten speziellen Fettsäureamide (b) ist gewährleistet, daß Beschichtungen bzw. Verklebungen permanent und ohne zusätzliche Vorbehandlung am Kunststoff haften können. Dabei bleiben einmal eingestellte Klebstoff- und/oder Beschichtungs-Kompatibilitäts-Werte über lange Zeiträume erhalten oder steigen manchmal sogar noch bei weiterführender Lagerung an. Im Hinblick auf die Klebstoffe und Beschichtungsmassen, die mit den erfindungsgemäß Oberflächen-modifizierten Polyolefinen in Kontakt gebracht werden können, so daß dabei eine dauerhafte Verklebung bzw. Beschichtung realisiert ist, gibt es erfindungsgemäß an sich keinerlei Beschränkungen. So können im Hinblick auf die Klebstoffe alle dem Fachmann vertrauten Klebstoffe, insbesondere der handelsüblichen Klebstoffe eingesetzt werden. Im Hinblick auf Beschichtungen sei insbesondere auf die Lacke aufmerksam gemacht. Lacke sind flüssige oder pulverförmig-feste Substanzen, die in dünner Schicht auf Gegenstände appliziert werden und die durch chemische Reaktion und/oder physikalische Vorgänge einen auf den Oberflächen der Objekte haftenden festen Film bilden, der dekorative und/oder schützende Funktionen hat. Zu den Beschichtungen zählt auch das Aufbringen von Druckfarben, da Druckfarben in einer Bindemittelschicht auf zu bedrukkende Substrate aufgebracht werden, wobei die Haftung am Formkörper durch das Bindemittel, das eine Beschichtung ausbildet, vermittelt wird.

Der Einsatz der Mischung enthaltend die Polyolefine und das Additiv-Masterbatch erfolgt durch übliche und dem Fachmann wohlvertraute formgebende Verarbeitungstechniken wie Extrusions-, Kalandrier-, Spritzguß, Blasformverfahren und dergleichen. Dabei ist es im Rahmen der Lehre der vorliegenden Erfindungen bevorzugt, wenn im Zuge der formgebenden Verarbeitung die Schmelze der Mischung enthaltend die Polyolefine und das Additiv-Masterbatch mit Sauerstoff - insbesondere Luftsauerstoff - in Kontakt kommt. Dies ist beispielsweise beim Extrudieren dann der Fall, wenn die Schmelze den Extruder durch die Austrittsdüse verläßt. Die genannte bevorzugte Ausführungsform ermöglicht, daß - gegebenenfalls katalytisch unterstützte - oxidative Prozesse sowie weitere Sekundärreaktionen stattfinden können. Dabei kann (Luft-)Sauerstoff einerseits an der Oberfläche selbst wirken, andererseits auch im Inneren des Kunststoffs - insbesondere in Oberflächen-nahen Bereichen -, wohin er durch Diffusion gelangen kann.

Die Kombination der erfindungsgemäßen Lehre, die zur Ausbildung erhöhter Beschichtungs- bzw. Verklebungs-Kompatibilitäts-Werte führt, mit an sich bekannten Technologien zur Verbesserung der Beschichtungs- bzw. Verklebungs-Kompatibilität auf Polyolefinoberflächen fällt in den Rahmen der erfindungsgemäßen Lehre. So können die Oberflächen der gemäß der vorliegenden Erfindung hergestellten Polyolefine zusätzlich sowohl mechanisch wie chemisch und/oder physikalisch behandelt werden. Erforderlich ist das allerdings in aller Regel nicht.

Als oleophiles Polyolefin-Basismaterial (A) für den Massenkunststoff eigenen sich an sich alle heute bekannten Polymer- und Copolymertypen auf Ethylen- beziehungsweise Propylen-Basis.

Auch Abmischungen reiner Polyolefine mit Copolymeren sind grundsätzlich geeignet, solange die Migrationsfähigkeit der Verbindungen b) im Sinne der Erfindung erhalten bleibt und damit ihre Anreicherung im Bereich der Feststoffoberflächen sichergestellt ist. Für die erfindungsgemäße Lehre besonders geeignete Polymertypen sind in der nachfolgenden Zusammenstellung aufgezählt:

Poly(ethylene) wie HDPE (high density polyethylene), LDPE (low density polyethylene), VLDPE (very low density polyethylene), LLDPE (linear low density polyethylene), MDPE (medium density polyethylene), UHMPE (ultra high molecular polyethylene), VPE (vernetztes Polyethylen), HPPE (high pressure polyethylene); isotaktisches Polypropylen; syndiotaktisches Polypropylen; Metallocen-katalysiert hergestelltes Polypropylen, schlagzäh-modifiziertes Polypropylen, Random-Copolymere auf Basis Ethylen und Propylen, Blockcopolymere auf Basis Ethylen und Propylen; EPM (Poly[ethylen-co-propylen]); EPDM (Poly[ethylen-co-propylen-co-nichtkonjugiertes Dien]).

Im Rahmen der vorliegenden Erfindung sind Homo- und Copolymere auf Basis von Ethylen und Propylen besonders bevorzugt. In einer Ausführungsform der vorliegenden Erfindung setzt man dementsprechen als Polyolefin ausschließlich Polyethylen ein, in einer anderen Ausführungsform ausschließlich Polypropylen, in einer weiteren Ausführungsform Copolymere auf Basis von Ethylen und Propylen.

Das Aufbringen von Beschichtungen oder Verklebungen der erfindungsgemäß erhaltenen Oberflächen-modifizierten Formkörper kann an sich nach allen dem Fachmann bekannten einschlägigen Methoden erfolgen.

In einer Ausführungsform setzt man als Polyolefin Polyethylen ein. Sofern es sich dabei um HDPE (high

density polyethylene) handelt, stellt man bei der formgebenden Verarbeitung vorzugsweise eine Temperatur im Bereich von 200 bis 300 °C, bei Ruß enthaltendem HDPE insbesondere 250 bis 300 °C ein, sofern es sich um LDPE (low density polyethylene) handelt, stellt man bei der formgebenden Verarbeitung vorzugsweise eine Temperatur im Bereich von 180 bis 260 °C und insbesondere 200 bis 260 °C ein.

Bei Extrusionsverfahren gelten die gerade für die HDPE- und LDPE-Verarbeitung gemachten Temperaturangaben insbesondere für die Temperatur der Austrittsdüse.

Sofern die formgebende Verarbeitung der Mischung von Polyolefin (A) und Additiv-Masterbatch (B) durch Extrusion geschieht, kühlt man den Polyolefinformkörper unmittelbar nach dem Verlassen der Austrittsdüse vorzugsweise innerhalb eines Zeitraums von 0,1 bis 5,0 Sekunden um maximal 50 °C ab. Hinsichtlich dieser Temperaturdifferenz von 50 °C - nachfolgend auch ΔT50 genannt - gilt also die Gleichung

$$\Delta T50 = T_{Austrittsdüse} - T_{Polyolefinoberfläche}$$

In dieser Gleichung ist unter $T_{Austrittsdüse}$ die Temperatur der Austrittsdüse des Extruders zu verstehen, unter $T_{Polyolefinoberfläche}$ die Oberflächentemperatur des extrudierten Polyolefinformkörpers zu verstehen, die berührungslos, beispielsweise unter Einsatz einschlägig bekannter Infrarot-Techniken, gemessen wird (etwa mit einem InfrarotThermometer "IR-TA/Handy 1000" der Firma Chino).

Besonders bevorzugt ist es, den Polyolefinformkörper unmittelbar nach dem Verlassen der Austrittsdüse des Extruders innerhalb eines Zeitraums von 1,0 bis 5,0 Sekunden und insbesondere von 1,7 bis 5,0 Sekunden um maximal 50 °C abzukühlen.

Unter der Voraussetzung, daß der Polyolefinformkörper sich ab dem Verlassen der Austrittsdüse des Extruders mit konstanter Geschwindigkeit bewegt, kann die genannte Zeitskala in einfacher Weise in eine Entfernungsskala transformiert werden. Hierzu wird die bekannte Gleichung v = s / t (Geschwindigkeit = Wegstrecke geteilt durch Zeit) herangezogen, aus der sich durch Umformung s = v * t (Wegstrecke = Geschwindigkeit mal Zeit) ergibt, aus der man ersieht, daß Wegstrecke s (d.h. Entfernung von der Austrittsdüse) und Zeit t einander proportional sind. Der Nullpunkt der Entfernungsskala liegt definitionsgemäß unmittelbar an der Austrittsstelle der Düse.

**Beispiele**

**Eingesetzte Substanzen**

**Beispiel 1:**

In einem 500ml Vierhalskolben, ausgerüstet mit Rührer, Thermometer und Destillationsbrücke, wurden unter Rühren eine Mischung von 214,86g ( 1 mol) Laurinsäuremethylester, 187,3 g (1 mol) 2-Butyl-2-ethyl-1,5-pentandiamin und 9,0g Natriummethylat Lösung (33%ig in Methanol) bei 130°C solange umgesetzt, bis kein Methanol mehr abgeschieden wurde. Zur Entfernung des restlichen Methanols wurde anschließend die Mischung bei einem Druck unterhalb von 5mbar und einer Temperatur von 130°C evakuiert. Das erhaltene Produkt hatte eine Aminzahl von 143.

**Beispiel 2:**

Wie Beispiel 1, jedoch wurden anstatt des 2-Butyl-2-ethyl-1,5-pentandiamins 117,5 g 2-Methylpentamethylendiamin eingesetzt. Das erhaltene Produkt hatte eine Aminzahl von 171.

**Beispiel 3:**

Wie Beispiel 1, jedoch wurde anstatt des 2-Butyl-2-ethyl-1,5-pentandiamins 91,1g 3-Amino-1,2-propandiol eingesetzt. Das erhaltene Produkt hatte eine Aminzahl von 10,2 und eine Hydroxylzahl von 383.

**Beispiel 4: LDPE-"Schaum"**

Rezeptur:

1) 98,9 Gew.% LDPE (Low Density Polyethylene)
2) 0,3 Gew.% Natriumhydrogencarbonat (chemisches Treibmittel)
3) 0,3 Gew.% Zitronensäuremethylester (chemisches Treibmittel)
4) 0,2 Gew.% Fluorcarbonpolymer (Flow Modifier)

5) 0,3 Gew.% Polyethylen-Wachs

Die Mischung der Komponenten 1) bis 5) wurde aufgeschmolzen und unter ständigem Einleiten von Stickstoff ($N_2$-Druck = 120 bar; $N_2$-Menge = 40 Vol.-% - bezogen auf das Volumen des extrudierten Polymeren) extrudiert (Doppelschneckenextruder; Temperatur im Extruder = 130 bis 190°C; Temperatur der Austrittsdüse = 200°C; Druck im Extruder = 100 bar; Schneckendrehzahl = 70 U/min). Der den Extruder verlassende Strang wurde anschließend durch einen Walzenspalt derart durchgeführt, daß sein Durchmesser auf einen Wert von 60 % seines ursprünglichen Wertes nach dem Verlassen der Austrittsdüse des Extruders reduziert wurde. Abschließend erfolgte eine Abkühlung des Stranges auf 20 bis 40°C sowie ein Zerschneiden. Das so erhaltene Granulat bestand aus Teilchen von etwa zylinderförmiger Form mit Längen im Bereich von 2 bis 5 mm.

**Beladene Schäume:**

**Beispiel 5:**

In einem offenen Planschliffkolben mit Halbkugelboden, ausgerüstet mit einem Ankerrührer, wurden 45 g der Substanz gemäß Beispiel 1 mit 0,035g Kobaltoctoat versetzt und bei 55-75°C Ölbadtemperatur gerührt. Anschließend wurden 133g LDPE-Schaum gemäß Beispiel 4 (auf 60°C vorgewärmt) portionsweise unter Rühren zur Mischung gegeben. Nachdem sämtlicher LDPE-Schaum zugegeben worden war, wurde unter Rühren auf Raumtemperatur abgekühlt. Ausbeute an beladenem LDPE-Schaum: 176g (bei 25% Additivgehalt).

**Beispiel 6:**

Wie Beispiel 5, jedoch unter Zusatz von Substanz gemäß Beispiel 2 anstelle von Substanz gemäß Beispiel 1.

**Beispiel 7:**

Wie Beispiel 5, jedoch unter Zusatz von Substanz gemäß Beispiel 3 anstelle von Substanz gemäß Beispiel 1.

**Anwendungsbeispiele:**

**Beispiel 8:**

4 Gewichtsprozent des oben beschriebenen Masterbatches (Beispiel 5) wurden in Polyethylen (Low Density Polyethylen, Lupolen H1800, Elenac) eingearbeitet. Für die Extrusion wurde ein Brabender Doppelschneckenkneter (DSK) 42/7 verwendet. Der DSK arbeitete mit gegenläufigen Schnecken wodurch eine extrem gute Durchmischung gewährleistet war. Die Temperaturen zur Verarbeitung der Additiv/Polyethylenmischungen betrugen in den drei vorhandenen Zonen entlang der Schnecke 220, 230 und 230°C und 230°C in der Austrittsdüse. Die Maße der Düse betrugen 50x0,5mm, so daß ein Band von 45mm Breite und 0,5mm Dicke erhalten wurde. Mit den so erhaltenen Polyethylenbänder wurden anschließend Verklebungsversuche durchgeführt. Die additivierten Polyethylenbänder wurden hierzu zwischen zwei Holzbrettchen verklebt, da ein direktes Verkleben der Bänder bei guten Haftwerten zum Materialbruch der Polyethylenbänder führen würde und kein Aussage über die Güte der Haftungeigenschaften erlauben würde. Die verklebte Fläche betrug in allen durchgeführten Versuchen 25mm x 25 mm= 625 $mm^2$ . Der für die Verklebungen verwendete Klebstoff war ein 2-Komponenten-Polyurethan-Klebstoff (Makroplast/Fa. Henkel) mit einer Topfzeit von einer Stunde. Harz UK 8109 und Härter UK 5430 weuden im Verhältnis 5:1 gemischt. Die Zugscherversuche mit den verklebten Polyethylenproben wurden mit einer ZWICK Universalprüfmaschine durchgeführt. Die Prüfgeschwindigkeit betrug 15mm/min. Die Zugscherfestigkeit - in der untenstehenden Tabelle 1 als ZSG bezeichnet - (N/$mm^2$) wurde als Quotient aus gemessener Kraft beim Bruch (N) und der Klebfläche (625 $mm^2$) berechnet. Bei sämtlichen Verklebungsversuchen wurde der Mittelwert aus fünf Einzelmessungen gebildet. Die ZSG-Werte sind Tabelle 1 zu entnehmen.

**Beispiel 9:**

Wie Beispiel 8, jedoch wurde der Masterbatch gemäß Beispiel 6 eingesetzt.

**Beispiel 10:**

Wie Beispiel 8, jedoch wurde der Masterbatch gemäß Beispiel 7 eingesetzt.

Tabelle 1

| | Beispiel 8 | Beispiel 9 | Beispiel 10 | Vergleich 1 |
|---|---|---|---|---|
| ZSG (MPa) | 4,5 | 4,1 | 4,51 | 0,34 |
| Vergleich 1: wie Beispiel 8, jedoch wurde auf einen Zusatz von Masterbatch verzichtet | | | | |

## Patentansprüche

1. Verwendung von Additiv-Masterbatches bei der Herstellung von Massenkunststoffen, **dadurch gekennzeichnet, daß** man Additiv-Masterbatches einsetzt, die dadurch erhältlich sind, daß man zunächst zu wenigstens einem Basispolymeren (a) ein chemisches Treibmittel gibt, die Masse schmilzt, vor und/oder nach dem Schmelzen mischt, und die Mischung unter Bildung eines schüttfähigen, porösen Trägermaterials abkühlt, mit der Maßgabe, daß man in einem Extruder oder mehrwelligen Kneter-Extruder arbeitet und wenigstens zeitweise ein inertes Gas in die Schmelze von Basispolymer und chemischem Treibmittel einleitet und den derart hergestellten Kunststoffschaum anschließend mit einer flüssigen und/oder aufgeschmolzenen Mischung belädt, wobei diese Mischung 0,01 bis 50 Gew.-% - bezogen auf die Basispolymeren - ein oder mehrerer Fettsäureamide (b) und 0,01 bis 1000 ppm ein oder mehrerer Übergangsmetall-Verbindungen (c) - Metallgehalt der Übergangsmetall-Verbindungen bezogen auf die Basispolymeren - enthält, mit der Maßgabe, daß man die Fettsäureamide (b) auswählt aus der Klasse der Verbindungen der allgemeinen Struktur (I),

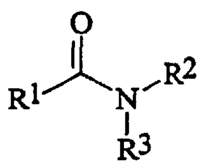

(I)

worin der Rest $R^1$ einen gesättigten Alkylrest mit 5 bis 21 C-Atomen, die Reste $R^2$ und $R^3$ - unabhängig voneinander - Wasserstoff oder Alkylreste mit 1 bis 18 C-Atomen, die mit jeweils bis zu 6 OH-Gruppen, $NH_2$-Gruppen oder $C_{1-10}$-Alkylgruppen substituiert sein können und bei denen bis zu drei Methylengruppen, die einander nicht unmittelbar benachbart sind, durch Sauerstoff ersetzt sein können, bedeuten, mit der Maßgabe, daß nicht beide Reste $R^1$ und $R^2$ gleichzeitig Wasserstoff bedeuten und der zusätzlichen Maßgabe, daß die Gesamtmenge der Komponenten (a), (b) und (c) Fettsäureamide auf Basis ungesättigter Fettsäuren höchstens in einer Menge enthält, die 40 Gew.-% - bezogen auf die Menge der Fettsäureamide (b) auf Basis gesättigter Fettsäuren - entspricht.

2. Verfahren zur Herstellung von verklebten und/oder beschichteten Polyolefin-basierten Formkörpern, Fasern und Folien, wobei man man eine Mischung enthaltend überwiegend ein oder mehrere Polyolefine (A) mit einem Additiv-Masterbatch (B), das dadurch erhältlich ist, daß man zunächst zu wenigstens einem Basispolymeren (a) ein chemisches Treibmittel gibt, die Masse schmilzt, vor und/oder nach dem Schmelzen mischt, und die Mischung unter Bildung eines schüttfähigen, porösen Trägermaterials abkühlt, mit der Maßgabe, daß man in einem Extruder oder mehrwelligen Kneter-Extruder arbeitet und wenigstens zeitweise ein inertes Gas in die Schmelze von Basispolymer und chemischem Treibmittel einleitet und den derart hergestellten Kunststoffschaum anschließend mit einer flüssigen und/oder aufgeschmolzenen Mischung belädt, wobei diese Mischung 0,01 bis 50 Gew.-% - bezogen auf die Basispolymeren - ein oder mehrerer Fettsäureamide (b) und 0,01 bis 1000 ppm ein oder mehrerer Übergangsmetall-Verbindungen (c) - Metallgehalt der Übergangsmetall-Verbindungen bezogen auf die Basispolymeren - enthält, mit der Maßgabe, daß man die Fettsäureamide (b) auswählt aus der Klasse der Verbindungen der allgemeinen Struktur (I),

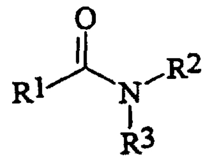

(I)

worin der Rest $R^1$ einen gesättigten Alkylrest mit 5 bis 21 C-Atomen, die Reste $R^2$ und $R^3$ - unabhängig voneinander - Wasserstoff oder Alkylreste mit 1 bis 18 C-Atomen, die mit jeweils bis zu 6 OH-Gruppen, $NH_2$-Gruppen oder $C_{1-10}$-Alkylgruppen substituiert sein können und bei denen bis zu drei Methylengruppen, die einander nicht unmittelbar benachbart sind, durch Sauerstoff ersetzt sein können, bedeuten, mit der Maßgabe, daß nicht beide Reste $R^1$ und $R^2$ gleichzeitig Wasserstoff bedeuten und der zusätzlichen Maßgabe, daß die Gesamtmenge der Komponenten (a), (b) und (c) Fettsäureamide auf Basis ungesättigter Fettsäuren höchstens in einer Menge enthält, die 40 Gew.-% - bezogen auf die Menge der Fettsäureamide (b) auf Basis gesättigter Fettsäuren - entspricht,
bei Temperaturen im Bereich von 180 bis 330 °C auf übliche Weise einer formgebenden Verarbeitung wie Extrusions-, Kalandrier-, Spritzguß-, Blasformverfahren und dergleichen unterwirft
und die dabei erhaltenen Polyolefin-basierten Formkörper, Fasern und Folien mit verbesserter Klebstoff- und/oder Beschichtungs-Kompatibilität anschließend auf übliche Weise mit einem Klebstoff und/oder einer Beschichtungsmasse in Kontakt bringt

## Claims

1. The use of additive master batches in the production of bulk plastics, **characterized in that** the additive master batches used are obtainable by first adding a chemical blowing agent to at least one basic polymer (a), melting the whole, mixing it before and/or after melting and cooling the mixture to form a pourable porous carrier material, with the proviso that an extruder or multiple-shaft kneader-extruder is used and an inert gas is introduced at least periodically into the melt of basic polymer and chemical blowing agent, and then charging the foam plastic thus produced with a liquid and/or molten mixture, this mixture containing 0.01 to 50% by weight — based on the basic polymer — of one or more fatty acid amides (b) and 0.01 to 1,000 ppm of one or more transition metal compounds (c) — metal content of the transition metal compounds, based on the basic polymer — with the proviso that the fatty acid amides (b) are selected from the class of compounds with the general structure (I):

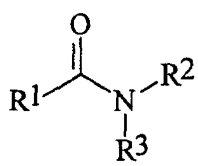

(I)

in which $R^1$ is a saturated $C_{5-21}$ alkyl group, $R^2$ and $R^3$ independently of one another represent hydrogen or $C_{1-18}$ alkyl groups which may each be substituted by up to 6 OH groups, $NH_2$ groups or $C_{1-10}$ alkyl groups, up to three methylene groups that are not immediately adjacent one another being replaceable by oxygen, with the proviso that $R^1$ and $R^2$ cannot both be hydrogen and with the additional proviso that the total quantity of components (a), (b) and (c) contains fatty acid amides based on unsaturated fatty acids in at most a quantity corresponding to 40% by weight, based on the quantity of fatty acid amides (b) based on saturated fatty acids.

2. A process for the production of bonded and/or coated polyolefin-based mouldings, fibres and films in which a mixture predominantly containing one or more polyolefins(A) is subjected with an additive master batch (B) obtainable by first adding a chemical blowing agent to at least one basic polymer (a), melting the whole, mixing it before and/or after melting and cooling the mixture to form a pourable porous carrier material, with the proviso that an extruder or multiple-shaft kneader-extruder is used and an inert gas is introduced at least periodically into the melt of basic polymer and chemical blowing agent and then charging the foam plastic thus produced with a liquid and/or molten mixture, this mixture containing 0.01 to 50% by weight — based on the basic polymer — of one or more fatty acid amides (b) and 0.01 to 1,000 ppm of one or more transition metal compounds (c) — metal content of the transition metal compounds, based on the basic polymer — with the proviso that the fatty acid amides (b)

are selected from the class of compounds with the general structure (I):

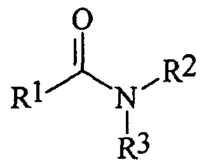

(I)

in which $R^1$ is a saturated $C_{5-21}$ alkyl group, $R^2$ and $R^3$ independently of one another represent hydrogen or $C_{1-18}$ alkyl groups which may each be substituted by up to 6 OH groups, $NH_2$ groups or $C_{1-10}$ alkyl groups, up to three methylene groups that are not immediately adjacent one another being replaceable by oxygen, with the proviso that $R^1$ and $R^2$ cannot both be hydrogen and with the additional proviso that the total quantity of components (a), (b) and (c) contains fatty acid amides based on unsaturated fatty acids in at most a quantity corresponding to 40% by weight, based on the quantity of fatty acid amides (b) based on saturated fatty acids,
to moulding in the usual way by extrusion, calendering, injection moulding, blow moulding and the like at temperatures of 180 to 330°C and the polyolefin-based mouldings, fibres and films obtained, which have improved adhesive and/or coating compatibility, are then contacted in the usual way with an adhesive and/or a coating composition.

**Revendications**

1. Utilisation de lot principal (Master batch) d'additif pour la production de matières plastiques en masse, **caractérisé** en qu'
on met en oeuvre des lots principaux d'additif accessibles en ce qu'on ajoute en premier lieu à au moins un polymère de base (a), un agent moussant chimique, on fond la masse, on mélange avant et/ou après la fusion et on refroidit le mélange en formant un matériau support poreux, apte à l'écoulement, avec la précision qu'on opère dans une extrudeuse ou une extrudeuse-malaxeuse à plusieurs axes, et qu'on introduit au moins graduellement un gaz inerte dans le produit de fusion du polymère de base et du produit moussant chimique, et on charge la mousse de matière plastique produite de cette manière ensuite avec un mélange liquide et/ou à l'état fondu, dans lequel ce mélange renferme de 0,01 à 50 % en poids rapporté au polymère de base - d'un ou plusieurs amides d'acide gras (b) et de 0,01 à 1000 ppm d'un ou plusieurs composés de métal de transition (c) — teneur en métal des composés de métal de transition rapporté aux polymères de base — avec la précision qu'on choisit les amides d'acide gras (b) dans la classe des composés de structure générale (I)

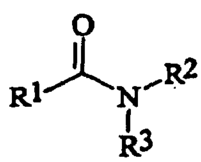

(I)

dans laquelle le reste $R^1$ signifie un reste alkyle saturé ayant de 5 à 21 atomes de carbone, le reste $R^2$ et $R^3$ — indépendamment l'un de l'autre — signifient de l'hydrogène ou des restes alkyle ayant de 1 à 18 atomes de carbone — qui peuvent être substitués par — respectivement — jusqu'à 6 groupes OH, des groupes -NH2 ou des groupes alkyle en $C_{1-10}$, et dans lesquels jusqu'à trois groupes méthylène qui ne sont pas voisins l'un de l'autre immédiatement peuvent être remplacés par de l'oxygène, avec la précision que les deux restes $R^1$ et $R^2$ ne signifient pas en même temps de l'hydrogène, et avec la précision supplémentaire que la quantité totale des composants (a), (b), (c) renferme des amides d'acide gras à base d'acides gras non saturés, au maximum en une quantité qui correspond à 40 % en poids — rapporté à la quantité de l'amide d'acide gras (b) à base d'acides gras saturés.

2. Procédé de production de solides moulés à base de polyolefines encollés et/ou enduits de fibres et de feuilles, dans lequel on ajoute un mélange contenant principalement un ou plusieurs oléfines (A), à un lot principal d'additif (B) accessible en ce qu'on en premier lieu à au moins un polymère de base (a) un agent moussant chimique, on fait fondre la masse, on mélange avant et/ou après la fusion et on refroidit le mélange en formant un matériau de

support poreux, apte à s'écouler, avec la précision qu'on opère dans une extrudeuse ou dans une extrudeuse-malaxeuse à plusieurs axes, et qu'on introduit au moins graduellement un gaz inerte dans le produit de fusion du polymère de base et de l'agent moussant chimique et on charge la mousse de matière plastique produite de cette façon ensuite avec un mélange liquide et/ ou amené à fusion, dans lequel ce mélange contient de 0,01 à 50 % en poids rapporté aux polymères de base — d'un ou plusieurs amide(s) d'acide gras (b) et de 0,01 à 1000 ppm d'un ou plusieurs composé(s) de métal de transition (c) — la teneur en métal des composés de métal de transition rapportée aux polymères de base — avec la précision qu'on soumet les amides d'acide gras (b) choisis dans la classe des composés de structure générale (I)

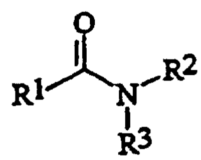

(I)

dans laquelle le reste $R^1$ signifie un reste alkyle saturé ayant de 5 à 21 atomes de carbone, les restes $R^2$ et $R^3$ — indépendamment l'un de l'autre — signifient de l'hydrogène ou des restes alkyle ayant de 1 à 18 atomes de carbone qui peuvent être substitués par — respectivement — jusqu'à 6 groupes OH, des groupes —NH2 ou des groupes alkyle en $C_{1-10}$, et pour lesquels jusqu'à trois groupes méthylène qui ne sont pas immédiatement voisins l'un de l'autre — peuvent être remplacés par de l'oxygène, avec la précision que les deux restes R1 et $R^2$ ne signifient pas en même temps de l'hydrogène et avec la précision supplémentaire que la quantité totale des composants (a), (b), (c) renferme des amides d'acide gras à base d'acides gras non saturés au maximum en une quantité qui correspond à 40 % en poids — rapporté à la quantité d'amide d'acide gras (b) à base d'acides gras saturés —
à des températures dans la zone de 180° à 330°C d'une manière habituelle à un façonnage modelant comme un processus d'extrusion, de calandrage, de coulée par injection, de moulage par soufflage et similaires, et on met en contact les solides moulés à base de polyoléfines, les fibres et les feuilles, obtenues de cette manière, ayant une compatibilité améliorée à l'encollage et/ ou à l'induction, ensuite d'une manière habituelle avec une masse d'encollage et/ou d'induction.